# EUROPÄISCHE PATENTSCHRIFT

(11) **EP 2 821 766 B1**
(45) Veröffentlichungstag und Bekanntmachung des Hinweises auf die Patenterteilung: **06.02.2019**
(21) Anmeldenummer: 14166707.1
(22) Anmeldetag: 30.04.2014
(51) Int. Cl.: G01L 1/16

(54) **Sensoranordnung**
Sensor assembly
Dispositif de détection

(30) Priorität: 18.06.2013 DE 102013211389
(43) Veröffentlichungstag der Anmeldung: 07.01.2015
(73) Patentinhaber: ROBERT BOSCH GMBH, 70442 Stuttgart (DE)
(72) Erfinder: Melcher, Reinhold, 91052 Erlangen (DE); Stichleutner, Karl, 72072 Tuebingen (DE); Jupe, Michael, 71636 Ludwigsburg (DE); Clauss, Helmut, 71735 Eberdingen (DE); Gaudl, Andreas, 73630 Remshalden (DE); Wang, Changyi, 70806 Kornwestheim (DE); Stephan, Holger, 70806 Kornwestheim (DE); Stein, Stefan, 70563 Stuttgart (DE); Schoenau, Kristin, 96047 Bamberg (DE)

(56) Entgegenhaltungen:
- EP-A1- 1 806 568
- EP-A2- 1 939 950
- DE-A1-102009 009 164
- JP-A- 2001 241 372
- JP-A- 2006 303 444
- US-A- 4 667 127
- US-A1- 2007 267 943
- US-A1- 2012 260 745

## Beschreibung

Die Erfindung betrifft eine Sensoranordnung zur Kraft- oder Druckmessung für den Einbau in einem Bauteil, insbesondere einem Kraftstoffinjektor zur Nadelschließzeiterkennung, umfassend wenigstens ein Sensorelement aus einem piezoelektrischen Material mit zwei parallel zueinander liegenden Stirnflächen, von denen jede eine Elektrode ausbildet oder aufnimmt.

### Stand der Technik

Eine derartige Sensoranordnung zur Kraft- oder Druckmessung ist aus der US 4 667 127 oder DE 10 2011 078 905 A1 bekannt. Diese Sensoranordnung ist für den Einbau in einen Kraftstoffinjektor zur Nadelschließzeitpunkterkennung ausgebildet und umfasst wenigstens zwei Sensorelemente aus einem piezoelektrischen Material mit zwei parallel zueinander liegenden Stirnflächen, von denen jede eine Elektrode ausbildet oder aufnimmt. Dabei liegt das Sensorelement mit einer eine Elektrode ausbildenden oder aufnehmenden Stirnfläche unmittelbar oder mittelbar an einer Stirnfläche eines weiteren Sensorelementes aus einem piezoelektrischen Material mit zwei parallel zueinander liegenden Stirnflächen, von denen ebenfalls jede eine Elektrode ausbildet oder aufnimmt, an. Beide Sensorelemente sind elektrisch leitend verbunden, wobei im Kontaktbereich beider Sensorelemente eine gemeinsame Elektrode ausgebildet wird. Diese elektrisch leitende Verbindung der beiden Sensorelemente erfolgt über eine stoffschlüssige Verbindung, beispielsweise eine Klebeverbindung oder eine Lötverbindung.

Eine weitere Sensoranordnung ist aus der DE 10 2009 002 895 A1 bekannt. Diese Sensoranordnung ist in eine Ausnehmung eines Bauteils in Form eines Kraftstoffinjektors in Verlängerung und zusammenwirkend mit einem Druckstift eingebaut. Der Druckstift wirkt mit einer Ventilnadel zusammen, deren Bewegungen auf den Druckstift und somit auf die Sensoranordnung übertragen werden.

Eine dritte Sensoranordnung ist aus der AT 506 706 B1 bekannt. Diese Sensoranordnung weist zumindest zwei Sensorelemente auf, von denen zumindest ein Sensorelement auf einem zugehörigen Elektrodenblech fixiert ist, und zwar mittels Bonden, Löten oder Thermokompression. Das Elektrodenblech ist dann weiterhin mit einem außenliegenden Kontaktstift verbunden.

Der Erfindung liegt die Aufgabe zugrunde, eine Sensoranordnung bereitzustellen, deren Herstellung ohne negative Auswirkungen auf die Funktion der Sensoranordnung vereinfacht ist.

### Offenbarung der Erfindung

### Vorteile der Erfindung

Diese Aufgabe wird gelöst durch eine Sensoranordnung nach Anspruch 1.

Dieser Ausgestaltung liegt die Erkenntnis zugrunde, dass aktuelle Einbindungskonzepte in eine Vorrichtung beziehungsweise Verbindungskonzepte viele komplexe Schritte beinhaltet, mit denen eine leitfähige Verbindung mit einer Stirnfläche oder mehreren Stirnflächen des zumindest einen Sensorelements und der umgebenden Vorrichtung hergestellt wird. Diese leitfähige Verbindung wird beispielsweise durch Verkleben mit zumindest einer Stirnfläche hergestellt. Dabei ist die Klebeverbindung gegebenenfalls zusätzlich durch eine thermische Behandlung in Form eines Einbrennvorgangs zu ergänzen. Möglich ist auch eine Verbindung durch einen Lötprozess. Durch die Erhitzung ändert das zumindest eine Sensorelement aber gegebenenfalls seine Eigenschaften und muss nach der erfolgten Verbindung neu polarisiert werden. Zudem kann die thermische oder Klebeverbindung unter Umständen zu einem Signalverlust durch eine ungünstige Klemmung des zumindest einen Sensorelements führen oder durch ein anderes Temperatur- und Steifigkeitsverhalten bei Druck- und Schwingungsbelasten eine Schädigung des Piezomaterials in Form beispielsweise einer mechanischen Degradation hervorrufen. Die gegebenenfalls erforderliche nachfolgende Polarisation des piezoelektrischen Materials kann zu einem Signalverlust und eventuell zu einem Verlust der Dauerstabilität führen, da sich das piezoelektrische Material beim Polarisieren mechanisch in Polarisationsrichtung längt und die Querkontraktion den Kontrakt in der Verbindungsschicht beeinträchtigen oder schädigen kann. Eine stoffschlüssige Verbindung kann auch den Polungsgrad der Keramik des piezoelektrischen Materials durch Querkräfte beeinflussen, was ebenfalls zu einer Signalreduktion führen kann. Alle diese Nachteile werden durch die erfindungsgemäße Ausgestaltung, bei der das Sensorelement an zumindest einer Stirnfläche beziehungsweise die Sensorelemente mit den einander zugewandten Stirnflächen nicht verklebt sondern verspannt sind, vermieden. Dies führt im Ergebnis zu einer vereinfachten Montage, einer Kostenreduktion bei der Produktion und einer Erhöhung der mechanischen Stabilität der gesamten Sensoranordnung sowie seines Signals über die Lebenszeit der Sensoranordnung.

In Weiterbildung der Erfindung sind ein oder mehr Sensorelemente zueinander gestapelt angeordnet, und die zueinander zugewandten Stirnseiten der Sensorelemente sind direkt oder indirekt zueinander kontaktierend mit dem umgebenden Gehäuse der entsprechenden Vorrichtung, in die das zumindest eine Sensorelement eingebaut wird, verspannt. Dieses ist eine bevorzugte Ausgestaltung, bei der die Sensorelemente ohne beispielsweise einen problematischen Lötprozeß in einfacher Weise miteinander verbunden werden.

In Weiterbildung der Erfindung sind die einander zugewandten Stirnflächen des piezoelektrischen Materials von dem Käfig verspannt beziehungsweise fixiert. Diese Verspannung beziehungsweise Fixierung lässt sich in einfacher Art und Weise, wie nachfolgend noch detailliert erläutert wird, herstellen. Der Käfig kann unabhängig davon, ob ein Sensorelement oder mehrere Sensorelemente eingebaut werden, eine Isolationsfunktion aufweisen, die den problemlosen Einbau beispielsweise in einer elektrisch leitenden Vorrichtung ohne weitere Isolationsmaßnahmen ermöglicht, so dass nur die Stirnfläche(n) das Gehäuse berühren kann.

In weiterer Ausgestaltung der Erfindung ist die Stirnfläche oder sind die einander zugewandten Stirnflächen von zumindest einem Sensorelement von einem insbesondere als Membran ausgebildeten Deckel einer das zumindest eine Sensorelement und den Käfig aufnehmenden Ausnehmung in dem Bauteil verspannt. Diese Ausgestaltung ist insbesondere bei einem Einbau in die Ausnehmung vorteilhaft anwendbar, wobei die Ausnehmung flüssigkeitsdicht und gasdicht gegenüber von außen einwirkenden Stoffen abgedichtet ist. Diese Abdichtung erfolgt durch den Deckel, der dicht beispielsweise in die Ausnehmung unter Erzeugung einer Vorspannung eingepresst wird oder beispielsweise mit dem die Ausnehmung umgebenden Bauteil verlötet oder verschweißt wird. Dabei ist bei diesem thermischen Verbindungsverfahren durch den nicht direkt bestehenden Kontakt zu den Sensorelementen die Gefahr einer thermischen Schädigung der Sensorelemente vermieden. Bei dieser Ausgestaltung kann der Deckel zusätzlich oder zumindest in einem Teilumfang alternativ zu dem Käfig eine Verspannfunktion in axialer Richtung der Stirnflächen übernehmen, um zum Beispiel unterschiedliche thermische Ausdehnungen des Sensorelements und des aufnehmenden Gehäuses zu kompensieren.

In der Erfindung ist unterhalb einer Stirnfläche eines Sensorelements eine Elektrode angeordnet. Die Elektrode ist mit einer Stromschiene verbunden, die einen Kontakt zum Signalabgriff aus dem zumindest einem Sensorelement gewährleistet.

Erfindungsgemäß ist die Elektrode entweder fest mit dem Käfig verbunden oder aber die Elektrode ist als separates Bauteil ohne eine feste Verbindung zu dem Käfig zwischen den Sensorelementen angeordnet. Hier erfolgt eine Auswahl nach den jeweiligen Gegebenheiten der Sensoranordnung beziehungsweise des Einbaus in das Bauteil.

Erfindungsgemäß ist der Werkstoff des Käfigs ein Kunststoff, der nicht elektrisch leitend ist und eine geringe Wasserlöslichkeit beziehungsweise Wasseraufnahme (< 10 Massenprozent) aufweist. Der aus einem Kunststoff hergestellte Käfig stellt einerseits eine Isolation der Sensorelemente gegenüber dem Bauteil beispielsweise beim Einbau in eine Ausnehmung des Bauteils her und andererseits ist der Käfig durch eine entsprechende Ausgestaltung oder Weiterbearbeitung geeignet, das zumindest eine Sensorelement zu verspannen. Diese Verspannung beziehungsweise Fixierung kann beispielsweise durch Nasen oder Klemmrillen an dem Käfig erfolgen, die beispielsweise die in den Käfig eingedrückten Sensorelemente in gewünschter Art und Weise zueinander verspannen. Die Verspannung kann aber auch durch eine Thermobehandlung des Käfigs erfolgen, indem beispielsweise unter Erzeugung einer extern aufgebrachten Vorspannung auf beispielsweise die Sensorelemente der Käfig thermisch behandelt wird und bei Abkühlung durch einen beispielsweisen Schrumpfprozess beispielsweise die Sensorelemente zueinander verspannt.

Dabei ist auch diese thermische Behandlung des Käfigs ohne nachteiligen Einfluss auf das zumindest eine Sensorelement, da die Behandlung bei einer Temperatur erfolgt, die geringer ist, als zu einer Depolarisation des Sensorelements erforderlich ist.

Erfindungsgemäß weist das zumindest eine Sensorelement eine vorzugsweise beidseitige stirnseitige Metallisierung vorzugsweise mit einer Dicke von 0,1 bis 15 µm auf. Die Erfindung ist grundsätzlich auch bei Sensorelementen ohne Metallisierung anwendbar, wobei aber eine Metallisierung der Sensorelemente die bevorzugte Ausführungsform ist. In diesem Zusammenhang ist darauf hinzuweisen, dass der Erfindungsgegenstand mit allen denkbaren und möglichen Kombinationen von Ausführungsformen des zumindest einen Sensorelements umsetzbar ist.

Erfindungsgemäß weist zumindest ein Sensorelement eine seitliche Aussparung auf. Diese seitliche Aussparung wird insbesondere genutzt, um eine Verbindung beispielsweise mit einer Stromschiene direkt oder indirekt herzustellen. So kann die Stromschiene mit der Metallisierung direkt oder indirekt beispielsweise mittels einer sogenannten Bond-Verbindung hergestellt werden oder aber die Stromschiene ist mit der Elektrode, die zwischen zwei Sensorelementen angeordnet ist, verbunden.

In einer besonders vorteilhaften Ausführung umfasst der Käfig neben dem zumindest einen Sensorelement und der Elektrode einen Kraftverteiler. Je nach Anzahl der Sensorelemente und deren Signalabnehmeverfahren kann ein metallischer, elektrisch leitender Kraftverteiler oder ein isolierender, keramischer Kraftverteiler, zum Beispiel aus Aluminiumoxid zwischen einer Membran und dem zumindest einen Sensorelement verwendet werden, um eine homogene Krafteinleitung in das zumindest eine Sensorelement zu ermöglichen.

Der Gegenstand der Erfindung wird vorzugsweise zur Druck- oder Kraftmessung an einem Kraftstoffinjektor eingesetzt, um mittels der Sensoranordnung mit einem oder mehreren Sensorelementen eine Nadelschließzeitpunkterkennung zu ermöglichen. Eine Nadelschließzeitpunkterkennung ist für das Steuerverhalten eines elektrisch angesteuerten Kraftstoffinjektors sinnvoll anwendbar. Dabei ist der Kraftstoffinjektor beispielsweise Teil eines Common-Rail-Einspritzsystems, mit dem beispielsweise Dieselkraftstoff, der aus einem Hochdruckspeicher entnommen wird, in einen zugeordneten Brennraum einer Brennkraftmaschine, an dem das Einspritzsystem verbaut ist, eingespritzt wird.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

### Kurze Beschreibung der Zeichnungen

Es zeigen:
- Figur 1: eine Schnittdarstellung einer Sensoranordnung bei dem zwei Sensorelemente der Sensoranordnung direkt aufeinander liegend in einem Käfig zueinander verspannt sind,
- Figur 2: eine Schnittdarstellung einer Sensoranordnung in einem zweiten Ausführungsbeispiel, bei dem zwischen zwei Sensorelementen der Sensoranordnung eine Elektrode angeordnet ist, die fest mit einem Käfig verbunden ist,
- Figur 3: eine Schnittdarstellung einer Sensoranordnung in einem dritten Ausführungsbeispiel, bei dem zwischen zwei Sensorelementen der Sensoranordnung ein Elektrode als separates Bauteil zwischen zwei Sensorelementen angeordnet ist,
- Figur 4: einen beispielhaften Einbau einer Sensoranordnung gemäß der Ausführungsform nach Figur 3 in ein Funktionsteil in Form eines Kraftstoffinjektors,
- Figur 5a bis 5c: eine Schnittdarstellung einer Sensoranordnung in weiteren Ausführungsbeispielen, bei denen ein die Sensoranordnung bildendes Sensorelement in einem Käfig angeordnet in verschiedenen Ausführungen an eine Stromschiene angebunden ist,
- Figur 6: eine Schnittdarstellung einer Sensoranordnung in einem weiteren Ausführungsbeispiel, bei dem ein Sensorelement der Sensoranordnung auf einer Elektrode angeordnet ist, die fest mit einem Käfig verbunden ist und
- Figur 7: eine Schnittdarstellung einer Sensoranordnung in einem weiteren Ausführungsbeispiel, bei dem ein Sensorelement der Sensoranordnung auf einer einseitig fest mit einem Käfig verbundenen Elektrode angeordnet ist.

### Ausführungsformen der Erfindung

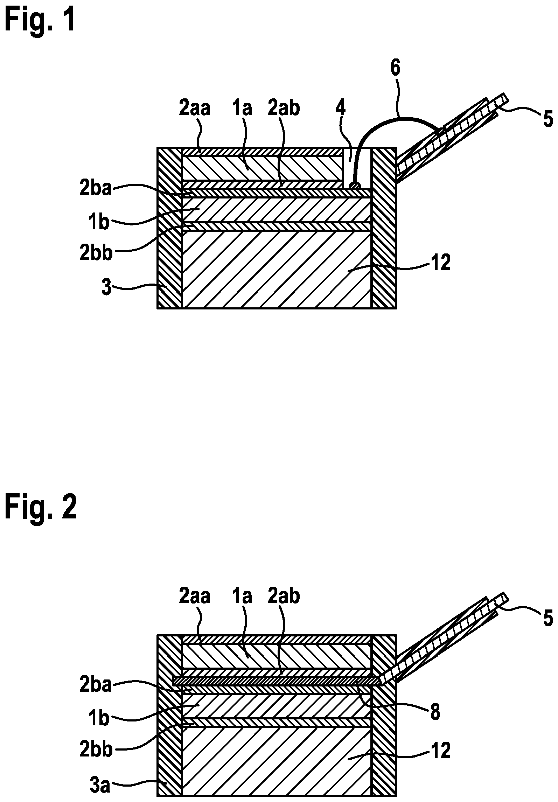

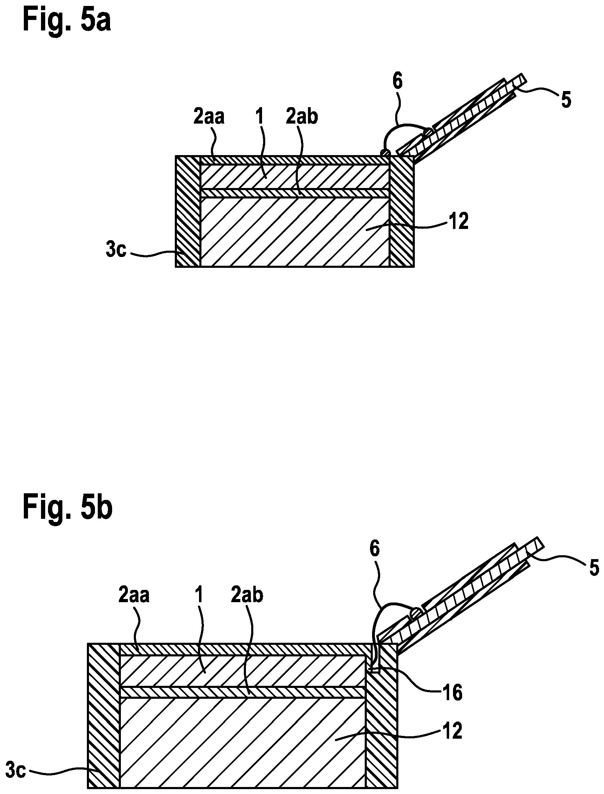

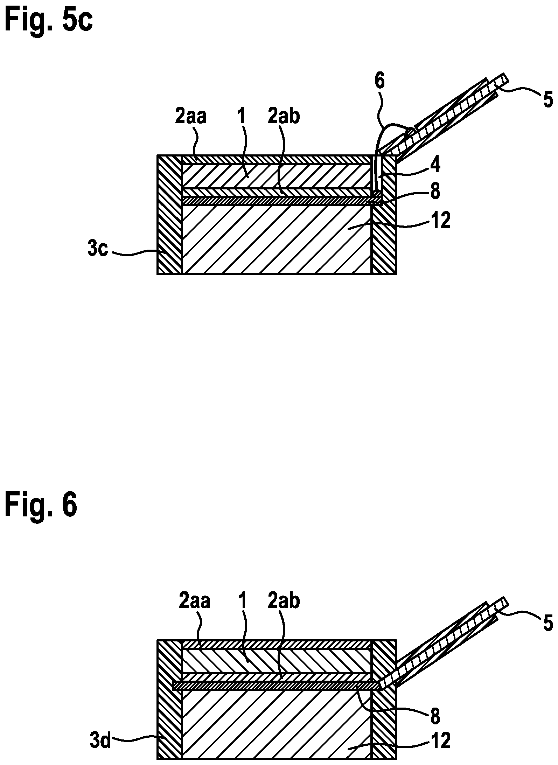

Die in Figur 1 dargestellte Sensoranordnung weist zwei aus einem piezoelektrischen Keramikmaterial hergestellte Sensorelemente 1a, 1b auf, die an ihren Stirnseiten jeweils eine Metallisierung 2aa, 2ab, 2ba, 2bb aufweisen. Die Sensorelemente 1a, 1b sind insbesondere aus einer Piezokeramik gefertigt, die bei einer auf sie ausgeübten Druckkraft ein Spannungssignal bezeihunghswese eine Ladungsverschiebung erzeugt. Dieses Spannungssignal kann direkt von der Piezokeramik oder aber über die Metallisierung 2aa, 2ab, 2ba, 2bb abgegriffen werden. Dabei ist es im Rahmen der Erfindung auch vorgesehen, mehr als zwei Sensorelemente 1a, 1b miteinander zu verbinden, wobei diese darüber hinaus grundsätzlich auch unterschiedlich mit oder ohne eine Metallisierung ausgestaltet sein können. Es kann aber, wie in den Figuren 5 bis 7 dargestellt ist, auch nur ein Sensorelement 1 vorgesehen sein, wenn die von einem Sensorelement erzeugte Signalhöhe ausreichend ist.

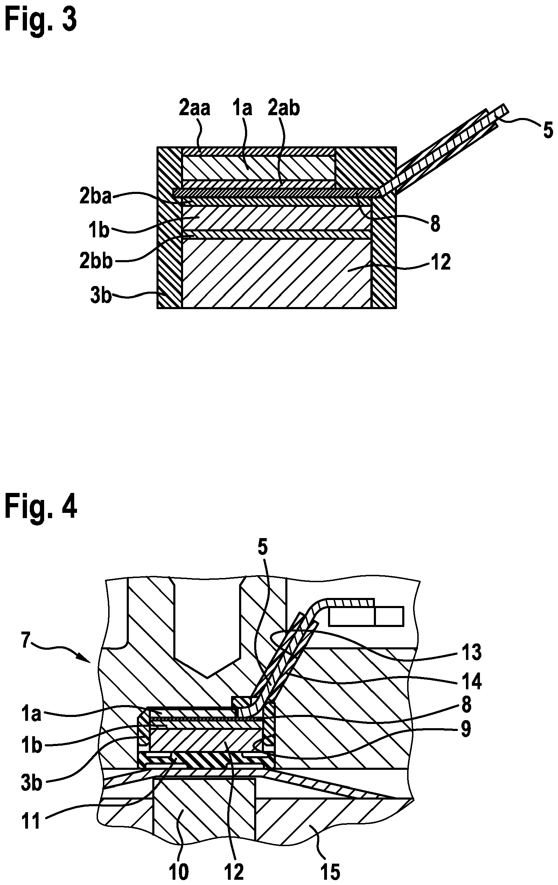

Die Sensorelemente 1a, 1b sind beispielsweise als runde Scheiben ausgebildet, können aber auch andere geometrische Formen aufweisen. Die Sensorelemente 1a, 1b sind in einem Käfig 3 eingesetzt, der vorzugsweise aus einem isolierenden Kunststoffwerkstoff gefertigt ist. Der Käfig weist beispielsweise innenliegende Nasen oder Klemmrillen auf, die auf die Sensorelemente 1a, 1b einwirkend eine Verspannung beziehungsweise Fixierung der Sensorelemente 1a, 1b gegenseitig bewirken Das obere Sensorelement 1a weist eine seitliche Aussparung 4 auf, die es ermöglicht, die miteinander zusammenwirkenden Metallisierungen 2ab, 2ba der beiden Sensorelemente 1a, 1b direkt oder indirekt mit beispielsweise einer Stromschiene 5 zu verbinden. Diese Verbindung kann beispielsweise mittels einer sogenannten Bond-Verbindung 6 hergestellt werden. Die äußeren Metallisierungen 2aa, 2bb bilden den Gegenpol zu den inneren mit der Stromschiene 5 verbundenen Metallisierungen 2ab, 2ba, wobei die Metallisierungen 2aa, 2bb beispielsweise mit dem elektrisch leitenden Funktionsteil in Form eines Kraftstoffinjektors 7 elektrisch leitend verbunden sind (siehe auch Figur 4). Dabei bildet dann der Kraftstoffinjektor 7 oder ein Gehäuseteil des Kraftstoffinjektors 7 den Gegenpol zu der Stromschiene 5. Unterhalb des Sensorelements 1b und der Metallisierung 2bb ist eine Kraftverteilerplatte 12 angeordnet, die ebenfalls in den Käfig 3 eingesetzt und von diesem gehalten ist. Die Kraftverteilerplatte 12 überträgt den von dem Kraftstoffinjektor ausgehenden Druck geleichmäßig auf die Sensorelemente 1a, 1b. Die Kraftverteilerplatte 12 ist beispielsweise als leitende Platte aus einem metallischen Werkstoff gefertigt.

Bei dem Ausführungsbeispiel gemäß Figur 2 ist zwischen den Sensorelementen 1a, 1b eine Elektrode 8 angeordnet, die fest mit dem Käfig 3a verbunden ist. Diese feste Verbindung mit dem Käfig 3a erfolgt beispielsweise durch ein Umspritzen der Elektrode 8 mit Kunststoff zur Formung des Käfigs 3a, beispielsweise unter Zuhilfenahme einer entsprechenden Spritzform. Die Elektrode 8 ist bei dieser Ausführungsform fest mit der Stromschiene 5 verbunden. In den so vorgefertigten Rohling der Sensoranordnung werden anschließend die Sensorelemente 1a, 1b eingesetzt, wobei der Käfig auch bei dieser Ausführungsform beispielsweise innenliegende Nasen oder Klemmrillen aufweist, die auf die Sensorelemente 1a, 1b einwirkend, eine Verspannung der Sensorelemente 1a, 1b gegenseitig unter Einschluss der Elektrode 8 bewirken. Die Sensorelemente 1a, 1b können aber auch nach dem Einsetzen in den wie zuvor ausgeführt vorgefertigten Rohling durch eine äußere Krafteinleitung verspannt werden und dann der Käfig 3a thermisch erhitzt werden. Dabei ist das Material des Käfigs 3a dann vorzugsweise so ausgelegt, dass es sich bei einem anschließenden Abkühlen nach Art eines Schrumpfschlauchs zusammenzieht und somit die Verspannung der Sensorelemente 1a, 1b bewirkt. Auch bei dieser Ausführungsform ist eine Kraftverteilerplatte 12 vorhanden, die ebenfalls in den Käfig 3 eingesetzt und von diesem gehalten ist.

Bei dem Ausführungsbeispiel gemäß Figur 3 wird der Käfig 3b zunächst in eine Ausnehmung 9 eines Bauteils eines Kraftstoffinjektors 7 eingepresst (siehe auch Figur 4). Anschließend wird das Sensorelement 1a mit der Aussparung 4 in den eingepressten Käfig 3b eingeführt, anschließend wird die Elektrode 8 mitsamt der Stromschiene 5 in der nachfolgend noch erläuterten Art und Weise eingebaut und abschließend wird das Sensorelement 1b und die Kraftverteilerplatte 12 in den Käfig 3b eingesetzt.

Ausweislich der Figur 4 ist die Ausnehmung 9 in einem Kopfteil (einer sogenannten Magnetbaugruppe) des nur ausschnittsweise dargestellten Kraftstoffinjektors 7 in axialer Verlängerung zu einem in einem Führungsteil 15 angeordneten Ventilbolzen beziehungsweise Ankerbolzen 10 angeordnet. Auf den Ankerbolzen 10 wirkt eine Kraft, die proportional zum Druck an der von der Membran 11 abgewandten Stirnfläche des Ankerbolzens 10 ist. Bei bekannter Druck- beziehungsweise Querschnittsfläche kann der Druck im Ventilraum des Injektors bestimmt werden. In Folge der gemessenen Kraftänderung während der Aktivierung des Injektors und des Schalten von Aktoren (zum Beispiel Magnetventilen) können Öffnungs- und Schließzeitpunkte der Aktoren bestimmt werden. Um insbesondere eine Nadelschließzeitpunkterkennung der Injektornadel zu ermöglichen, ist die erfindungsgemäße Sensoranordnung mit den Sensorelementen 1a, 1b in einer Halteplatte eines Ablaufstutzens des Kraftstoffinjektors 7 verbaut, wobei die axiale Kraft des Ankerbolzens 10 beziehungsweise der auf den Ankerbozen 10 wirkende Kraftstoffdruck auf die Sensorelemente 1a, 1b übertragen wird. Die Anordnung des Sensorraums innerhalb des Injektors und ihre Ausführung (Position, Größe, Ausführung der Kontaktierung können design- und montagebedingte Variationen zur der Darstellung in der Figur aufweisen.

Dazu ist eine mit der Ventilnadel 10 zusammenwirkende Membran 11 vorgesehen, die die Ausnehmung 9 mit den eingesetzten Sensorelementen 1a, 1b und der Elektrode 8 verschließt. Um eine gleichmäßige Druckbeaufschlagung des unteren Sensorelements 1b und auch des oberen Sensorelementes 1a zu gewährleisten, ist zwischen der Membran 11 und dem Sensorelement 1b die Kraftverteilerplatte 12 angeordnet. Montiert wird die Sensoranordnung in der Ausnehmung 9 in dem Kraftstoffinjektor 7 in der Form, dass zunächst der Käfig 3b in die Ausnehmung 9 eingepresst wird und dann das Sensorelement 1a in den Käfig 3b eingeführt wird. Anschließend wird die Elektrode 8 mit der angeschlossenen Stromschiene 5 eingebaut, wobei die Stromschiene 5 durch einen Kanal 13 in dem Kopfteil des Kraftstoffinjektors 7 durchgeschoben wird. Der Kanal 13 ist beispielsweise durch eine Isolierhülse 14 gegenüber dem Kopfteil des Kraftstoffinjektors 7 isoliert. Die Isolierhülse 14 kann auch mit dem Käfig 3b als ein Bauteil ausgebildet sein. Anschließend wird das untere Sensorelement 1b in den Käfig 3b eingeführt und dann die Kraftverteilerplatte 12 eingesetzt. In einem anderen Ausführungsbeispiel wird die gesamte Sensoranordnung mit dem Käfig 3b außerhalb montiert und als Gesamtbauteil in den Sensorbauraum eingeführt. Abschließend wird die Membran 11 unter Erzeugung einer Verspannung der Sensorelemente 1a, 1b und der Elektrode 8 in die Ausnehmung 9 eingesetzt und beispielsweise mit dem Kopfteil des Kraftstoffinjektors 7 verschweißt, wobei sichergestellt ist, dass auch bei Temperaturänderungen immer ein elektrischer Kontakt des zumindest einen Sensorelements 1a, 1b mit den Polen beziehungsweise der Stromschiene 5 besteht.

Die in Figur 5a bis 5c dargestellte Sensoranordnung weist ein aus einem piezoelektrischen Keramikmaterial hergestelltes Sensorelement 1 auf, das an seinen Stirnseiten jeweils eine Metallisierung 2aa, 2ab aufweist. Auch das Sensorelement 1 ist insbesondere aus einer Piezokeramik gefertigt, die bei einer auf sie ausgeübten Druckkraft eine Ladungsverschiebung beziehungsweise ein abgreifbares Spannungssignal erzeugt. Das Sensorelement 1 ist als runde Scheibe ausgebildet und in einen Käfig 3c eingesetzt, der aus einem isolierenden Kunststoffwerkstoff gefertigt ist. Andere geometrische Ausführungen der Sensorscheibe sind auch möglich. Die Metallisierung 2aa des Sensorelements 1 ist direkt (Figur 5a) oder über eine seitliche Kontaktnase 16 unter Verwendung einer Bond-Verbindung mit der Stromschiene 5 verbunden. Bei der Ausführungsform gemäß Figur 5c weist das Sensorelement 1 eine seitliche Aussparung 4 auf, die zur Durchführung einer Bond-Verbindung zu der unterhalb der Metallisierung 2ab angeordneten Elektrode 8 dient. Bei der Erforderung der Figuren 5a bis 7 ist die Kraftverteilerplatte 12 aus einem isolierenden Material mit hoher Steifigkeit, beispielsweise Al₂O₃, oder ähnlichem hergestellt. Die Kraftverteilerplatte 12 kann je nach Erforderung in dem Käfig geklemmt oder direkt mit eingespritzt sein.

Bei dem Ausführungsbeispiel gemäß Figur 6 ist analog zu der Ausführungsform gemäß Figur 2 unterhalb des Sensorelements 1 eine Elektrode 8 angeordnet, die fest mit dem Käfig 3d verbunden ist. Diese feste Verbindung mit dem Käfig 3d erfolgt beispielsweise durch ein Umspritzen der Elektrode 8 und der darunterliegenden Kraftverteilerplatte 12 mit Kunststoff zur Formung des Käfigs 3d, beispielsweise unter Zuhilfenahme einer entsprechenden Spritzform. Die Elektrode 8 ist bei dieser Ausführungsform fest mit der Stromschiene 5 verbunden beziehungsweise als ein Bauteil geformt. In den so vorgefertigten Rohling der Sensoranordnung wird anschließend das Sensorelement 1 eingesetzt, wobei der Käfig auch bei dieser Ausführungsform beispielsweise innenliegende Nasen oder Klemmrillen aufweist, die auf das Sensorelement 1 einwirkend eine Verspannung mit der Elektrode 8 und der Kraftverteilerplatte 12, die auch hier aus einem Material mit hoher Steifigkeit und einer Isolierfunktion gefertigt ist, ausüben.

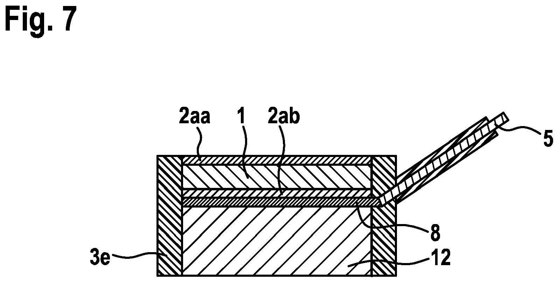

Bei dem Ausführungsbeispiel gemäß Figur 7 wird analog zu der Ausführungsform gemäß Figur 3 der Käfig 3e zunächst in eine Ausnehmung 9 eines Bauteils eines Kraftstoffinjektors 7 eingepresst (siehe auch Figur 4). Anschließend wird das Sensorelement 1 mit oder ohne Aussparung 4 in den eingepressten Käfig 3e eingeführt, anschließend wird die Elektrode 8 mitsamt der Stromschiene 5 in der zuvor (Figur 4) erläuterten Art und Weise eingebaut und abschließend wird die Kraftverteilerplatte 12 in den Käfig 3e eingesetzt. Abschließend wird darauf hingewiesen, dass die zuvor beschriebenen Ausführungsbeispiele in beliebiger Art und Weise vollständig oder in Form von Teilausführungen miteinander kombiniert werden können.

Bei allen in den Figuren 5 bis 7 ausgeführten Ausgestaltungen ist auch eine Umschließung durch thermische Einwirkung, wie in Figur 2 beschrieben, möglich.

## Patentansprüche

1. Sensoranordnung zur Kraft- oder Druckmessung für den Einbau in eine Vorrichtung, insbesondere in einen Kraftstoffinjektor (7) zur Nadelschließzeitpunkterkennung, umfassend wenigstens ein Sensorelement (1, 1a, 1b) aus einem piezoelektrischen Material mit zwei parallel zueinander liegenden Stirnflächen, von denen jede eine Elektrode ausbildet oder aufnimmt,
**dadurch gekennzeichnet, dass** das Sensorelement (1, 1a, 1b) im Bereich seiner Seitenflächen von einem Käfig (3, 3a, 3b, 3c, 3d, 3e) umgeben ist und unterhalb einer Stirnfläche des Sensorelements (1) eine Elektrode (8) angeordnet ist, die fest mit dem Käfig (3, 3a, 3b) verbunden ist, wobei unterhalb der Elektrode (8) eine aus einem isolierenden Material mit hoher Steifigkeit gefertigte Kraftverteilerplatte (12) angeordnet ist und der Werkstoff des Käfigs (3, 3a, 3b, 3c, 3d, 3e) Kunststoff ist, wobei das Sensorelement (1) stirnseitige Metallisierungen (2aa, 2ab) aufweist und die Elektrode (8) unterhalb der Metallisierung (2ab) angeordnet und mit einer Stromschiene (5) verbunden ist.

2. Sensoranordnung nach einem der vorherigen Ansprüche,
**dadurch gekennzeichnet, dass** die Stirnfläche und/oder die einander zugewandten Stirnflächen durch einen insbesondere als Membran (11) ausgebildeten Deckel einer das zumindest eine Sensorelement (1, 1a, 1b) und den Käfig (3b) aufnehmenden Ausnehmung (9) in der Vorrichtung verspannt sind.

3. Sensoranordnung nach einem der vorherigen Ansprüche,
**dadurch gekennzeichnet, dass** das Sensorelement (1) und/oder die Sensorelemente (1a, 1b) mittels Nasen oder Klemmrillen an dem Käfig (3, 3a, 3b, 3c, 3d, 3e) verspannt sind.

4. Sensoranordnung nach einem der vorherigen Ansprüche,
**dadurch gekennzeichnet, dass** das Sensorelement (1) und/oder die Sensorelemente (1a, 1b) durch eine Thermobehandlung des Käfigs (3, 3a, 3b, 3c, 3d, 3e) in dem Käfig (3, 3a, 3b, 3c, 3d, 3e) verspannt sind.

5. Sensoranordnung nach einem der vorherigen Ansprüche,
**dadurch gekennzeichnet, dass** zumindest ein Sensorelement (1, 1a) eine seitliche Aussparung (4) aufweist.

## Claims

1. Sensor assembly for force or pressure measurement for installation in a device, in particular in a fuel injector (7) for needle closing time detection, comprising at least one sensor element (1, 1a, 1b) made of a piezoelectric material and having two end faces lying parallel to each other, each of which forms or accommodates an electrode,
**characterized in that** the sensor element (1, 1a, 1b) is surrounded by a cage (3, 3a, 3b, 3c, 3d, 3e) in the region of its side faces, and underneath one end face of the sensor element (1) there is arranged an electrode (8), which is firmly connected to the cage (3, 3a, 3b), wherein underneath the electrode (8) there is arranged a force distribution plate (12) fabricated from an insulating material with high rigidity, and the material of the cage (3, 3a, 3b, 3c, 3d, 3e) is plastic, wherein the sensor element (1) has metallizations (2aa, 2ab) at the front, and the electrode (8) is arranged underneath the metallization (2ab) and is connected to a busbar (5) .

2. Sensor assembly according to one of the preceding claims,
**characterized in that** the end face and/or the mutually facing end faces are clamped in the device by a cover, in particular formed as a membrane (11), of a recess (9) accommodating the at least one sensor element (1, 1a, 1b) and the cage (3b).

3. Sensor assembly according to one of the preceding claims,
**characterized in that** the sensor element (1) and/or the sensor elements (1a, 1b) are clamped by means of lugs or clamping grooves on the cage (3, 3a, 3b, 3c, 3d, 3e) .

4. Sensor assembly according to one of the preceding claims,
**characterized in that** the sensor element (1) and/or the sensor elements (1a, 1b) are clamped in the cage (3, 3a, 3b, 3c, 3d, 3e) by means of a thermal treatment of the cage (3, 3a, 3b, 3c, 3d, 3e) .

5. Sensor assembly according to one of the preceding claims,
**characterized in that** at least one sensor element (1, 1a) has a lateral recess (4).

## Revendications

1. Système de capteur pour la mesure de force ou de pression, destiné à être monté dans un dispositif, en particulier dans un injecteur de carburant (7) pour la détection de l'instant de fermeture d'un pointeau, comprenant au moins un élément capteur (1, 1a, 1b) en matériau piézoélectrique ayant deux faces frontales disposées parallèlement l'une à l'autre, dont chacune forme ou reçoit une électrode,
**caractérisé en ce que** l'élément capteur (1, 1a, 1b) est entouré dans la région de ses faces latérales par une cage (3, 3a, 3b, 3c, 3d, 3e) et **en ce qu'**une électrode (8) solidement reliée à la cage (3, 3a, 3b) est disposée en-dessous d'une face frontale de l'élément capteur (1), dans lequel une plaque de répartition de force (12) en matériau isolant et de rigidité élevée est disposée en-dessous de l'électrode (8) et le matériau de la cage (3, 3a, 3b, 3c, 3d, 3e) est une matière plastique, dans lequel l'élément capteur (1) présente des métallisations frontales (2aa, 2ab) et l'électrode (8) est disposée en-dessous de la métallisation (2ab) et est reliée à une barre conductrice (5).

2. Système de capteur selon l'une des revendications précédentes, **caractérisé en ce que** la face frontale et/ou les faces frontales orientées l'une vers l'autre sont renforcées dans le dispositif par un couvercle, notamment réalisé sous forme de membrane (11), d'un évidement (9) qui reçoit ledit au moins un élément capteur (1,1a,1b) et la cage (3b).

3. Système de capteur selon l'une des revendications précédentes, **caractérisé en ce que** l'élément capteur (1) et/ou les éléments capteurs (1a, 1b) sont fixés à la cage (3, 3a, 3b, 3c, 3d, 3e) par des becs ou par des gorges de serrage.

4. Système de capteur selon l'une des revendications précédentes, **caractérisé en ce que** l'élément capteur (1) et/ou les éléments capteurs (1a, 1b) sont renforcés dans la cage (3, 3a, 3b, 3c, 3d, 3e) par un traitement thermique de la cage (3, 3a, 3b, 3c, 3d, 3e).

5. Système de capteur selon l'une des revendications précédentes, **caractérisé en ce qu'**au moins un élément capteur (1, 1a) présente un évidement latéral (4) .
